# EUROPEAN PATENT APPLICATION

(11) **EP 3 753 981 A1**
(43) Date of publication of application: **23.12.2020**
(21) Application number: 19754755.7
(22) Date of filing: 06.02.2019
(51) Int. Cl.: C08L 13/02, B29C 41/14, C08K 3/011, C08K 3/10, C08K 3/11, B29K 9/00

(54) **LATEX COMPOSITION AND FILM MOLDED ARTICLE**

(30) Priority: 16.02.2018 JP 2018026244
(71) Applicant: Zeon Corporation, Tokyo 100-8246 (JP)
(72) Inventor: KITAGAWA, Masaru, Tokyo 100-8246 (JP)
(74) Representative: Gerauer, Marc Philippé
(86) International application number: PCT/JP2019/004199
(87) International publication number: WO 2019/159780

(57) **Abstract**

The present invention provided a latex composition comprising a latex of a carboxyl group-containing conjugated diene-based rubber (A), a water-soluble metal compound (B), and a water-insoluble metal compound (C) including a transition metal of Group IV of the periodic table, wherein the metal compound (C) is present in an amount of 0.5 to 4 parts by weight relative to 100 parts by weight of the carboxyl group-containing conjugated diene-based rubber (A).

## Description

### TECHNICAL FIELD

The present invention relates to a latex composition and a molded film such as a dip-molded article produced using the latex composition. More specifically, the present invention relates to a latex composition which can provide a molded film such as a dip-molded article which can avoid delayed (Type IV) allergic reactions in addition to immediate (Type I) allergic reactions, has high tensile strength and stress retention, and barely fails beading/rolling, and also relates to a molded film such as a dip-molded article produced using such a latex composition.

### BACKGROUND ART

Conventionally, it has been known that dip-molded articles (e.g., teats, air balls, gloves, balloons, and stalls) for use in contact with the human body can be produced by dip-molding a latex composition containing natural latex represented by a natural rubber latex. However, in some cases, such dip-molded articles are not suitable for use in direct contact with the mucosa or organs of a living body because the natural rubber latex contains proteins that may cause immediate (Type I) allergic reactions in the human body. In response to this problem, the use of a synthetic nitrile rubber latex such as a nitrile rubber has been studied.

For example, Patent Document 1 discloses a latex composition obtainable by mixing zinc oxide, sulfur, and a vulcanization accelerator with an emulsion which contains a carboxylated nitrile butadiene random terpolymer containing acrylonitrile, a carboxylic acid, and butadiene and has a total solids content of 15 to 25 wt%. Unfortunately, although the technique of Patent Document 1 can prevent immediate (Type I) allergic reactions, dip-molded articles obtained using this technique may cause delayed (Type IV) allergic reactions due to sulfur and the vulcanization accelerator contained in the dip-molded articles in some cases when these substances touch the human body.

As a technique to overcome this issue, for example, Patent Document 2 discloses a use of a mixture of a trivalent metal or a trivalent metal compound as a cross-linking agent, a specific polyethylene glycol or a polyethylene glycol derivative, and a specific hydroxide salt to prepare a latex composition containing at least one base polymer, a cross-linking agent, and a pH modifier. Since the technique disclosed in Patent Document 2 does not involve sulfur and any sulfur compounds (vulcanization accelerators), not only immediate (Type I) allergic reactions but also delayed (Type IV) allergic reactions can be prevented.

### RELATED ART

### PATENT DOCUMENT

Patent Document 1: Japanese Patent No. 5697578
Patent Document 2: International Publication No. WO 2016/72835

### SUMMARY OF THE INVENTION

### PROBLEM TO BE SOLVED BY THE INVENTION

A general method for producing a molded film such as a dip-molded article by dip-molding involves performing beading (cuff rolling) on a cuff portion of a dip-molded layer formed on a dip mold before removal from the dip mold to form a demolding tab. In particular, such a beading process is preferably performed on dip-molded articles for gloves to provide products which are resistant to tearing during use and are easy to put on. In view of such circumstances, the present inventor has made an examination and found that although the technique of Patent Document 2 can prevent delayed (Type IV) allergic reactions as well as immediate (Type I) allergic reactions, unfortunately, the resulting dip-molded article may be torn during beading or the resulting dip-molded layer may adhere to a dip mold so strongly that the beading/rolling operation cannot be completed.

The present invention has been devised in response to the above issues, and an object thereof is to provide a latex composition which can provide a molded film such as a dip-molded article which can avoid delayed (Type IV) allergic reactions in addition to immediate (Type I) allergic reactions, has high tensile strength and stress retention, and barely fails beading/rolling, and to provide a molded film such as a dip-molded article produced using such a latex composition.

### MEANS FOR SOLVING THE PROBLEM

As a result of dedicated research to achieve the above object, the present inventor has found that the above object can be achieved by a latex composition prepared by adding a water-soluble metal compound and a specific amount of a water-insoluble metal compound including a transition metal of Group IV of the periodic table to a latex of a carboxyl group-containing conjugated diene-based rubber. This finding has led to the completion of the present invention.

Specifically, the present invention provides a latex composition comprising a latex of a carboxyl group-containing conjugated diene-based rubber (A), a water-soluble metal compound (B), and a water-insoluble metal compound (C) including a transition metal of Group IV of the periodic table,
wherein the metal compound (C) is present in an amount of 0.5 to 4 parts by weight relative to 100 parts by weight of the carboxyl group-containing conjugated diene-based rubber (A).

In the present invention, the metal compound (B) is preferably an aluminum compound.

In the present invention, the water-soluble metal compound (B) is preferably sodium aluminate.

In the present invention, the water-soluble metal compound (B) is preferably present in an amount of 0.1 to 1.5 parts by weight relative to 100 parts by weight of the carboxyl group-containing conjugated diene-based rubber (A).

In the present invention, the water-insoluble metal compound (C) is preferably titanium dioxide or zirconium dioxide.

In the present invention, the amount of the water-insoluble metal compound (C) present is preferably 1.5 to 3 parts by weight relative to 100 parts by weight of the carboxyl group-containing conjugated diene-based rubber (A).

The present invention also provides a molded film comprising the latex composition according to the present invention.

The present invention further provides a method for producing a dip-molded article, the method comprising the step of dip-molding the latex composition according to the present invention.

### EFFECTS OF INVENTION

The present invention can provide a latex composition which can provide a molded film such as a dip-molded article which can avoid delayed (Type IV) allergic reactions in addition to immediate (Type I) allergic reactions, has high tensile strength and high stress retention, and barely fails beading/rolling. The present invention can also provide a molded film and a dip-molded article produced using such a latex composition.

### DESCRIPTION OF EMBODIMENTS

The latex composition according to the present invention contains a latex of a carboxyl group-containing conjugated diene-based rubber (A), a water-soluble metal compound (B), and a water-insoluble metal compound (C) including a transition metal of Group IV of the periodic table, and the metal compound (C) is present in an amount of 0.5 to 4 parts by weight relative to 100 parts by weight of the carboxyl group-containing conjugated diene-based rubber (A).

### <Latex of carboxyl group-containing conjugated diene-based rubber (A)>

The latex of the carboxyl group-containing conjugated diene-based rubber (A) used in the present invention is a latex of a copolymer obtained by copolymerizing a monomer mixture containing at least a conjugated diene monomer and an ethylenically unsaturated carboxylic acid monomer. The carboxyl group-containing conjugated diene-based rubber (A) is preferably at least one selected from a carboxyl group-containing nitrile rubber (a1), a carboxyl group-containing styrene-butadiene rubber (a2), and a carboxyl group-containing conjugated diene rubber (a3).

A latex of the carboxyl group-containing nitrile rubber (a1) is a latex of a copolymer obtained by copolymerizing an ethylenically unsaturated nitrile monomer with the conjugated diene monomer and the ethylenically unsaturated carboxylic acid monomer, and may be a latex of a copolymer obtained by copolymerizing these monomers optionally with other ethylenically unsaturated monomers copolymerizable with the monomers.

Examples of the conjugated diene monomer include 1,3-butadiene, isoprene, 2,3-dimethyl-1,3-butadiene, 2-ethyl-1,3-butadiene, 1,3-pentadiene, chloroprene, and the like. Among these, preferred are 1,3-butadiene and isoprene, and more preferred is 1,3-butadiene. These conjugated diene monomers may be used alone or in combination. The proportion of conjugated diene monomer units formed by the conjugated diene monomer in the carboxyl group-containing nitrile rubber (a1) is preferably 56 to 78 wt%, more preferably 56 to 73 wt%, still more preferably 56 to 68 wt%. Control of the proportion of conjugated diene monomer units within the above ranges results in a molded film such as a dip-molded article which has sufficient tensile strength and has an excellent texture and excellent elongation at the same time.

The ethylenically unsaturated carboxylic acid monomer may be any ethylenically unsaturated monomer having a carboxyl group. Examples thereof include, but are not limited to, ethylenically unsaturated monocarboxylic acids such as acrylic acid and methacrylic acid; ethylenically unsaturated polyvalent carboxylic acids such as itaconic acid, maleic acid, and fumaric acid; ethylenically unsaturated polyvalent carboxylic acid anhydrides such as maleic anhydride and citraconic anhydride; ethylenically unsaturated polycarboxylic acid partial ester monomers such as monobutyl fumarate, monobutyl malate, and mono-2-hydroxypropyl maleate; and the like. Among these, preferred are ethylenically unsaturated monocarboxylic acids, and particularly preferred is methacrylic acid. These ethylenically unsaturated carboxylic acid monomers may be used in the form of an alkali metal salt or an ammonium salt. Further, these ethylenically unsaturated carboxylic acid monomers may be used alone or in combination. The proportion of ethylenically unsaturated carboxylic acid monomer units formed by the ethylenically unsaturated carboxylic acid monomer in the carboxyl group-containing nitrile rubber (a1) is preferably 2 to 5 wt%, more preferably 2 to 4.5 wt%, still more preferably 2.5 to 4.5 wt%. Control of the proportion of ethylenically unsaturated carboxylic acid monomer units within the above ranges results in a molded film such as a dip-molded article which has sufficient tensile strength and has an excellent texture and excellent elongation at the same time.

The ethylenically unsaturated nitrile monomer may be any ethylenically unsaturated monomer having a nitrile group. Examples thereof include, but are not limited to, acrylonitrile, methacrylonitrile, fumaronitrile, α-chloroacrylonitrile, α-cyanoethylacrylonitrile, and the like. Among these, preferred are acrylonitrile and methacrylonitrile, and more preferred is acrylonitrile. These ethylenically unsaturated nitrile monomers may be used alone or in combination. The proportion of ethylenically unsaturated nitrile monomer units formed by the ethylenically unsaturated nitrile monomer in the carboxyl group-containing nitrile rubber (a1) is preferably 20 to 40 wt%, more preferably 25 to 40 wt%, still more preferably 30 to 40 wt%. Control of the proportion of ethylenically unsaturated nitrile monomer units within the above ranges results in a molded film such as a dip-molded article which has sufficient tensile strength and has an excellent texture and excellent elongation at the same time.

Examples of the other ethylenically unsaturated monomers copolymerizable with the conjugated diene monomer, the ethylenically unsaturated carboxylic acid monomer, and the ethylenically unsaturated nitrile monomer include vinyl aromatic monomers such as styrene, alkylstyrenes, and vinylnaphthalene; fluoroalkyl vinyl ethers such as fluoroethyl vinyl ether; ethylenically unsaturated amide monomers such as (meth)acrylamide, N-methylol(meth)acrylamide, N,N-dimethylol(meth)acrylamide, N-methoxymethyl(meth)acrylamide, and N-propoxymethyl(meth)acrylamide; ethylenically unsaturated carboxylic acid ester monomers such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, dibutyl maleate, dibutyl fumarate, diethyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, and dimethylaminoethyl (meth)acrylate; cross-linkable monomers such as divinylbenzene, polyethylene glycol di(meth)acrylate, polypropylene glycol di(meth)acrylate, trimethylolpropane tri(meth)acrylate, and pentaerythritol (meth)acrylate; and the like. These ethylenically unsaturated monomers may be used alone or in combination.

The proportion of other monomer units formed by the other ethylenically unsaturated monomers in the carboxyl group-containing nitrile rubber (a1) is preferably 10 wt% or less, more preferably 5 wt% or less, still more preferably 3 wt% or less.

The latex of the carboxyl group-containing nitrile rubber (a1) used in the present invention can be obtained by copolymerizing a monomer mixture containing the above-mentioned monomers, and the monomers are preferably copolymerized by emulsion polymerization. As an emulsion polymerization method, a conventionally known method can be employed.

During emulsion polymerization of the monomer mixture containing the above-mentioned monomers, ordinarily used polymerization additives, such as an emulsifier, a polymerization initiator, and a molecular weight modifier, can be used. These polymerization additives may be added in any manner, and any of initial single addition, portion-wise addition, continuous addition, and the like may be used.

Examples of the emulsifier include, but are not limited to, nonionic emulsifiers such as polyoxyethylene alkyl ethers, polyoxyethylene alkylphenol ethers, polyoxyethylene alkyl esters, and polyoxyethylene sorbitan alkyl esters; anionic emulsifiers such as alkylbenzenesulfonic acid salts including potassium dodecylbenzenesulfonate and sodium dodecylbenzenesulfonate, higher alcohol sulfuric acid ester salts, and alkylsulfosuccinic acid salts; cationic emulsifiers such as alkyltrimethylammonium chlorides, dialkylammonium chlorides, and benzylammonium chloride; copolymerizable emulsifiers such as sulfoesters of α,β-unsaturated carboxylic acids, sulfate esters of α,β-unsaturated carboxylic acids, and sulfoalkylaryl ethers; and the like. Among these, anionic emulsifiers are preferred, alkylbenzenesulfonic acid salts are more preferred, and potassium dodecylbenzenesulfonate and sodium dodecylbenzenesulfonate are particularly preferred. These emulsifiers may be used alone or in combination. The amount of the emulsifier to be used is preferably 0.1 to 10 parts by weight relative to 100 parts by weight of the monomer mixture.

Examples of the polymerization initiator include, but are not limited to, inorganic peroxides such as sodium persulfate, potassium persulfate, ammonium persulfate, potassium perphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, 2,5-dimethylhexane-2,5-dihydroperoxide, di-t-butyl peroxide, di-α-cumyl peroxide, acetyl peroxide, isobutyryl peroxide, and benzoyl peroxide; azo compounds such as azobisisobutyronitrile, azobis-2,4-dimethylvaleronitrile, and methyl azobisisobutyrate; and the like. These polymerization initiators may be used alone or in combination. The amount of the polymerization initiator to be used is preferably 0.01 to 10 parts by weight, more preferably 0.01 to 2 parts by weight relative to 100 parts by weight of the monomer mixture.

In addition, a combination of a peroxide initiator with a reducing agent can be used as a redox polymerization initiator. Examples of such reducing agents include, but are not limited to, compounds containing a metal ion in a reduced state such as ferrous sulfate and cuprous naphthenate; sulfonic acid compounds such as sodium methanesulfonate; amine compounds such as dimethylaniline; and the like. These reducing agents may be used alone or in combination. The amount of the reducing agent to be used is preferably 3 to 1000 parts by weight relative to 100 parts by weight of the peroxide.

The amount of water to be used during emulsion polymerization is preferably 80 to 600 parts by weight, particularly preferably 100 to 200 parts by weight relative to 100 parts by weight of the total monomers used.

Examples of methods for adding monomers include a method of adding the monomers in a reactor at a time, a method of continuously or intermittently adding the monomers according to the progress of polymerization, a method in which the reaction is carried out up to a specific conversion ratio by adding a part of the monomers and then the remaining monomers are continuously or intermittently added and polymerized, and the like. Any of these methods may be employed. In the case of mixing and adding the monomers continuously or intermittently, the composition of the mixture may be constant or may be changed. Further, the monomers used may be mixed and then added to the reactor, or each monomer may be individually added to the reactor.

Further, polymerization additives, such as a chelating agent, a dispersing agent, a pH modifier, a deoxidizing agent, and a particle size adjusting agent, can be optionally used. The types and the amounts to be used of such polymerization additives are not particularly limited.

The polymerization temperature during emulsion polymerization is typically 3 to 95°C, preferably 5 to 60°C, although not particularly limited thereto. The polymerization time is about 5 to 40 hours.

When the monomers are emulsion polymerized as described above to a predetermined polymerization conversion ratio, the polymerization reaction is stopped by cooling the polymerization system or by adding a polymerization terminator. The polymerization conversion ratio at which the polymerization reaction is stopped is typically 90 wt% or more, more preferably 93 wt% or more.

Examples of the polymerization terminator include, but are not limited to, hydroxylamine, hydroxylamine sulfate, diethylhydroxylamine, hydroxyamine sulfonic acid and alkali metal salts thereof, sodium dimethyldithiocarbamate, hydroquinone derivatives, catechol derivatives, aromatic hydroxydithiocarboxylic acids (e.g., hydroxydimethylbenzenethiocarboxylic acid, hydroxydiethylbenzenedithiocarboxylic acid, and hydroxydibutylbenzenedithiocarboxylic acid) and alkali metal salts thereof, and the like. The amount of the polymerization terminator to be used is preferably 0.05 to 2 parts by weight relative to 100 parts by weight of the monomer mixture.

After stopping the polymerization reaction, if desired, unreacted monomers may be removed, and the solids content and the pH may be adjusted. Thus, the latex of the carboxyl group-containing nitrile rubber (a1) can be obtained.

An anti-aging agent, a preservative, an antibacterial agent, a dispersing agent, and the like may be optionally added to the latex of the carboxyl group-containing nitrile rubber (a1) used in the present invention.

The number average particle size of the latex of the carboxyl group-containing nitrile rubber (a1) used in the present invention is preferably 60 to 300 nm, more preferably 80 to 150 nm. The particle size can be adjusted to a desired value by, for example, selecting the amounts of emulsifier and polymerization initiator to be used.

A latex of the carboxylic group-containing styrene-butadiene rubber (a2) used in the present invention is a latex of a copolymer obtained by copolymerizing styrene with 1,3-butadiene as the conjugated diene monomer and the ethylenically unsaturated carboxylic acid monomer, and may be a latex of a copolymer obtained by copolymerizing these monomers optionally with other ethylenically unsaturated monomers copolymerizable with the monomers.

The proportion of butadiene units formed by 1,3-butadiene in the carboxyl group-containing styrene-butadiene rubber (a2) is preferably 56 to 78 wt%, more preferably 56 to 73 wt%, still more preferably 56 to 68 wt%. Control of the proportion of butadiene units within the above ranges results in a molded film such as a dip-molded article which has sufficient tensile strength and has an excellent texture and excellent elongation at the same time.

The ethylenically unsaturated carboxylic acid monomer may be any ethylenically unsaturated monomer having a carboxyl group. Examples thereof that can be used include, but are not limited to, the same monomers as those mentioned above for the latex of the carboxyl group-containing nitrile rubber (a1). The proportion of ethylenically unsaturated carboxylic acid monomer units formed by the ethylenically unsaturated carboxylic acid monomer in the carboxyl group-containing styrene-butadiene rubber (a2) is preferably 2 to 5 wt%, more preferably 2 to 4.5 wt%, still more preferably 2.5 to 4.5 wt%. Control of the proportion of ethylenically unsaturated carboxylic acid monomer units within the above ranges results in a molded film such as a dip-molded article which has sufficient tensile strength and has an excellent texture and excellent elongation at the same time.

The proportion of styrene units formed by styrene in the carboxyl group-containing styrene-butadiene rubber (a2) is preferably 20 to 40 wt%, more preferably 25 to 40 wt%, still more preferably 30 to 40 wt%. Control of the proportion of styrene units within the above ranges results in a molded film such as a dip-molded article which has sufficient tensile strength and has an excellent texture and excellent elongation at the same time.

Examples of the other ethylenically unsaturated monomers copolymerizable with 1,3-butadiene as the conjugated diene monomer, the ethylenically unsaturated carboxylic acid monomer, and styrene include the same monomers (except styrene) as those mentioned above for the latex of the carboxyl group-containing nitrile rubber (a1). Other examples include conjugated diene monomers other than 1,3-butadiene, such as isoprene, 2,3-dimethyl-1,3-butadiene, 2-ethyl-1,3-butadiene, 1,3-pentadiene, and chloroprene, and the like. The proportion of other monomer units formed by the other ethylenically unsaturated monomers in the carboxyl group-containing styrene-butadiene rubber (a2) is preferably 10 wt% or less, more preferably 5 wt% or less, still more preferably 3 wt% or less.

The latex of the carboxyl group-containing styrene-butadiene rubber (a2) used in the present invention can be obtained by copolymerizing a monomer mixture containing the above-mentioned monomers, and the monomers are preferably copolymerized by emulsion polymerization. The same emulsion polymerization method as that for the carboxyl group-containing nitrile rubber (a1) may be carried out using the same polymerization additives as those for the carboxyl group-containing nitrile rubber (a1).

An anti-aging agent, a preservative, an antibacterial agent, a dispersing agent, and the like may be optionally added to the latex of the carboxyl group-containing styrene-butadiene rubber (a2) used in the present invention.

The number average particle size of the latex of the carboxyl group-containing styrene-butadiene rubber (a2) used in the present invention is preferably 60 to 300 nm, more preferably 80 to 150 nm. The particle size can be adjusted to a desired value by, for example, selecting the amounts of emulsifier and polymerization initiator to be used.

A latex of the carboxylic group-containing conjugated diene rubber (a3) used in the present invention is a latex of a copolymer obtained by copolymerizing the conjugated diene monomer and the ethylenically unsaturated carboxylic acid monomer, and may be a latex of a copolymer obtained by copolymerizing these monomers optionally with other ethylenically unsaturated monomers copolymerizable with the monomers.

The proportion of conjugated diene monomer units formed by the conjugated diene monomer in the carboxyl group-containing conjugated diene rubber (a3) is preferably 80 to 98 wt%, more preferably 90 to 98 wt%, still more preferably 95 to 97.5 wt%. Control of the proportion of conjugated diene monomer units within the above ranges results in a molded film such as a dip-molded article which has sufficient tensile strength and has an excellent texture and excellent elongation at the same time.

The ethylenically unsaturated carboxylic acid monomer may be any ethylenically unsaturated monomer having a carboxyl group. Examples thereof that can be used include, but are not limited to, the same monomers as those mentioned above for the latex of the carboxyl group-containing nitrile rubber (a1). The proportion of ethylenically unsaturated carboxylic acid monomer units formed by the ethylenically unsaturated carboxylic acid monomer in the carboxyl group-containing conjugated diene rubber (a3) is preferably 2 to 10 wt%, more preferably 2 to 7.5 wt%, still preferably 2.5 to 5 wt%. Control of the proportion of ethylenically unsaturated carboxylic acid monomer units within the above ranges results in a molded film such as a dip-molded article which has sufficient tensile strength and has an excellent texture and excellent elongation at the same time.

Examples of the conjugated diene monomer include 1,3-butadiene, isoprene, 2,3-dimethyl-1,3-butadiene, 2-ethyl-1,3-butadiene, 1,3-pentadiene, chloroprene, and the like. The conjugated diene monomer may include only one of these or may include a combination thereof.

Examples of the other ethylenically unsaturated monomers copolymerizable with the conjugated diene monomer and the ethylenically unsaturated carboxylic acid monomer include the same monomers as those mentioned above for the latex of the carboxyl group-containing nitrile rubber (a1). The proportion of other monomer units formed by the other ethylenically unsaturated monomers in the carboxyl group-containing conjugated diene rubber (a3) is preferably 10 wt% or less, more preferably 5 wt% or less, still more preferably 3 wt% or less.

The latex of the carboxylic group-containing conjugated diene rubber (a3) used in the present invention can be obtained by copolymerizing a monomer mixture containing the above-mentioned monomers, and the monomers are preferably copolymerized by emulsion polymerization. The same emulsion polymerization method as that for the carboxyl group-containing nitrile rubber (a1) may be carried out using the same polymerization additives as those for the carboxyl group-containing nitrile rubber (a1).

An anti-aging agent, a preservative, an antibacterial agent, a dispersing agent, and the like may be optionally added to the latex of the carboxylic group-containing conjugated diene rubber (a3) used in the present invention.

The number average particle size of the latex of the carboxylic group-containing conjugated diene rubber (a3) used in the present invention is preferably 60 to 300 nm, more preferably 80 to 150 nm. The particle size can be adjusted to a desired value by, for example, selecting the amounts of emulsifier and polymerization initiator to be used.

### <Water-soluble metal compound (B)>

Besides the latex of the carboxyl group-containing conjugated diene-based rubber (A), the latex composition according to the present invention also contains a water-soluble metal compound (B). In the latex composition according to the present invention, the water-soluble metal compound (B) acts as a cross-linking agent.

The present invention uses the water-soluble metal compound (B) as an alternative cross-linking agent to sulfur, which is a cross-linking agent commonly used, and additionally does not require any sulfur-containing vulcanization accelerator during cross-linking. For this reason, the present invention is effective in avoiding delayed (Type IV) allergic reactions due to sulfur and sulfur-containing vulcanization accelerators in addition to immediate (Type I) allergic reactions.

The water-soluble metal compound (B) may be any compound that contains a metal and is soluble in water. Examples thereof include, but are not limited to, sodium compounds, potassium compounds, lithium compounds, calcium compounds, magnesium compounds, aluminum compounds, cobalt compounds, and the like. Among these, preferred are water-soluble metal compounds containing a metal with a valency of 3 or more such as aluminum compounds and cobalt compounds because they allow the carboxyl group-containing conjugated diene-based rubber (A) in the latex to be cross-linked more successfully. Preferred are water-soluble metal compounds containing a trivalent metal, and more preferred are aluminum compounds.

Examples of such aluminum compounds include, but are not limited to, aluminum hydroxide, aluminum nitrate, aluminum sulfate, ammonium aluminum sulfate, aluminum bromide, aluminum fluoride, aluminum potassium sulfate, aluminum isopropoxide, sodium aluminate, potassium aluminate, sodium aluminum sulfite, and the like. These aluminum compounds may be used alone or in combination. Among these, sodium aluminate is preferably used to further enhance the effects of the present invention.

In the latex composition according to the present invention, the water-soluble metal compound (B) is present in an amount of 0.1 to 1.5 parts by weight, preferably 0.1 to 1.25 parts by weight, more preferably 0.1 to 1.0 part by weight relative to 100 parts by weight of the carboxyl group-containing conjugated diene-based rubber (A) in the latex. Control of the amount of the water-soluble metal compound (B) within the above ranges ensures favorable stability of the latex composition, and therefore allows the latex composition to be cross-linked sufficiently while effectively preventing the formation of agglomerates in the latex composition. As a result, a molded film such as a dip-molded article having further enhanced tensile strength and stress retention can be obtained.

### <Water-insoluble metal compound (C) including transition metal of Group IV of periodic table>

Besides the latex of the carboxyl group-containing conjugated diene-based rubber (A) and the water-soluble metal compound (B) described above, the latex composition according to the present invention also contains a water-insoluble metal compound (C) including a transition metal of Group IV of the periodic table. Specifically, the latex composition according to the present invention contains such a water-insoluble metal compound (C) including a transition metal of Group IV of the periodic table in an amount of 0.5 to 4 parts by weight relative to 100 parts by weight of the carboxyl group-containing diene rubber (A) in the latex.

In the present invention, when a dip-molded article is formed using a dip mold, the presence of the water-insoluble metal compound (C) including a transition metal of Group IV of the periodic table (hereinafter, as appropriate, referred to as "Group IV metal compound (C)") in an amount controlled as described above in the latex composition can reduce the adhesion strength between a dip-molded layer formed and the dip mold, thereby improving beading (cuff rolling) workability. Accordingly, a beading/rolling failure can be effectively prevented.

In particular, intensive studies by the present inventor revealed the following facts: Although delayed (Type IV) allergic reactions due to sulfur and sulfur-containing vulcanization accelerators as well as immediate (Type I) allergic reactions can be effectively avoided by using the above water-soluble metal compound (B) as a cross-linking agent, the use thereof does not provide sufficient beading (cuff rolling) workability, thereby resulting in the beading/rolling failure. On the other hand, the presence of the Group IV metal compound (C) in an amount controlled as described above reduces the adhesion strength between a dip-molded layer formed by dip-molding and a dip mold (e.g., reduces the peel strength to preferably 10 N or less, more preferably 8 N or less), and effectively prevents the beading/rolling failure.

The Group IV metal compound (C) may be any compound which contains a transition metal of Group IV of the periodic table and is insoluble in water (in other words, compound which does not dissolve in water). Examples thereof include, but are not limited to, oxides of transition metals of Group IV such as titanium dioxide (TiO₂), zirconium dioxide (ZrO₂), and hafnium dioxide (HfO₂); bromides of transition metals of Group IV such as hafnium tetrabromide (HfBr₄); and the like. Among these, preferred are oxides of transition metals of Group IV because they are highly effective in preventing the beading/rolling failure. More preferred are titanium dioxide (TiO₂) and zirconium dioxide (ZrO₂).

In the latex composition according to the present invention, the Group IV metal compound (C) is present in an amount of 0.5 to 4 parts by weight, preferably 1 to 3.5 parts by weight, more preferably 1.5 to 3.0 parts by weight relative to 100 parts by weight of the carboxyl group-containing diene rubber (A) in the latex. In the process of forming a molded film such as a dip-molded article using a dip mold, too much or too little Group IV metal compound (C) results in higher adhesion strength between a dip-molded layer formed by dip-molding and the dip mold, and thus is not effective in preventing the beading/rolling failure.

The ratio "water-soluble metal compound (B):Group IV metal compound (C)" of the water-soluble metal compound (B) and the Group IV metal compound (C) contained in the latex composition according to the present invention is preferably 1:2.6 to 1:15, more preferably 1:2.8 to 1:10, still more preferably 1:3 to 1:5 on a weight basis.

Besides the latex of the carboxyl group-containing conjugated diene-based rubber (A), the water-soluble metal compound (B), and the Group IV metal compound (C), the latex composition according to the present invention may further contain at least one alcoholic hydroxyl group-containing compound (D) selected from a saccharide (d1), a sugar alcohol (d2), a hydroxy acid (d3), and a hydroxy acid salt (d4). The additional presence of the alcoholic hydroxyl group-containing compound (D) further enhances the stability of the latex composition.

The saccharide (d1) may be any monosaccharide or polysaccharide in which two or more monosaccharides are bound by a glycosidic bond. Examples thereof include, but are not limited to, monosaccharides such as erythrose, threose, ribose, lyxose, xylose, arabinose, allose, talose, gulose, altrose, galactose, idose, erythrulose, xylulose, ribulose, psicose, fructose, sorbose, and tagatose; disaccharides such as trehalose, maltose, isomaltose, cellobiose, gentiobiose, melibiose, lactose, sucrose, and palatinose; trisaccharides such as maltotriose, isomaltotriose, panose, cellotriose, manninotriose, solatriose, melezitose, planteose, gentianose, umbelliferose, lactosucrose, and raffinose; homo-oligosaccharides such as maltotetraose and isomaltotetraose; tetrasaccharides such as stachyose, cellotetraose, scorodose, lyquinose, and panose; pentasaccharides such as maltopentaose and isomaltopentaose; hexasaccharides such as maltohexaose and isomaltotetraose; and the like. These may be used alone or in combination.

The sugar alcohol (d2) may be any mono- or polysaccharide alcohol. Examples thereof include, but are not limited to, tritols such as glycerin; tetritols such as erythritol, D-threitol, and L-threitol; pentitols such as D-arabinitol, L-arabinitol, xylitol, ribitol, and pentaerythritol; pentaerythritol; hexitols such as sorbitol, D-iditol, galactitol, D-glucitol, and mannitol; heptitols such as volemitol and perseitol; octitols such as D-erythro-D-galacto-octitol; and the like. These may be used alone or in combination. Among these, preferred are hexitols, which are sugar alcohols having 6 carbon atoms, and more preferred is sorbitol.

The hydroxy acid (d3) may be any carboxylic acid having a hydroxyl group. Examples thereof include, but are not limited to, aliphatic hydroxy acids such as glycolic acid, lactic acid, tartronic acid, glyceric acid, 2-hydroxybutyric acid, 3-hydroxybutyric acid, γ-hydroxybutyric acid, malic acid, 3-methylmalic acid, tartaric acid, citramalic acid, citric acid, isocitric acid, leucinic acid, mevalonic acid, pantoic acid, ricinoleic acid, ricinelaidic acid, cerebronic acid, quinic acid, shikimic acid, and serine; aromatic hydroxy acids such as monohydroxybenzoic acid derivatives including salicylic acid, creosote acid (homosalicylic acid, hydroxy(methyl)benzoic acid), vanillic acid, sillic acid, hydroxypropanoic acid, hydroxypentanoic acid, hydroxyhexanoic acid, hydroxyheptanoic acid, hydroxyoctanoic acid, hydroxynonanoic acid, hydroxydecanoic acid, hydroxyundecanoic acid, hydroxydododecanoic acid, hydroxytridecanoic acid, hydroxytetradecanoic acid, hydroxypentadecanoic acid, hydroxyheptadecanoic acid, hydroxyoctadecanoic acid, hydroxynonadecanoic acid, hydroxyicosanoic acid, and ricinoleic acid, dihydroxybenzoic acid derivatives including pyrocatechuic acid, resorcylic acid, protocatechuic acid, gentisic acid, and orthophosphoric acid, trihydroxybenzoic acid derivatives including gallic acid, phenylacetic acid derivatives including mandelic acid, benzilic acid, and atorlactic acid, and cinnamic acid/hydrocinnamic acid derivatives including melilotic acid, phloretic acid, coumaric acid, umbellic acid, caffeic acid, ferulic acid, and sinapinic acid; and the like. These may be used alone or in combination. Among these, preferred are aliphatic hydroxy acids, more preferred are aliphatic α-hydroxy acids, still more preferred are glycolic acid, lactic acid, tartronic acid, glyceric acid, malic acid, tartaric acid, and citric acid, and particularly preferred is glycolic acid.

The hydroxy acid salt (d4) may be any hydroxy acid salt. Examples thereof include, but are not limited to, metal salts of the hydroxy acids exemplified for the hydroxy acid (d3). Specific examples include salts of alkali metals such as sodium and potassium; and salts of alkaline earth metals such as calcium and magnesium. The hydroxy acid salt (d4) may include only one of these or may include a combination thereof. The hydroxy acid salt (d4) is preferably an alkali metal salt of a hydroxy acid, more preferably a sodium salt of a hydroxy acid. Further, the hydroxy acid constituting the hydroxy acid salt (d4) is preferably an aliphatic hydroxy acid, more preferably an aliphatic α-hydroxy acid, even more preferably glycolic acid, lactic acid, tartronic acid, glyceric acid, malic acid, tartaric acid, or citric acid, particularly preferably glycolic acid. In other words, the hydroxy acid salt (d4) is particularly preferably sodium glycolate.

In the latex composition according to the present invention, the alcoholic hydroxyl group-containing compound (D) is present in an amount which gives a weight ratio "water-soluble metal compound (B):alcoholic hydroxyl group-containing compound (D)" relative to the water-soluble metal compound (B) within the range of preferably 1:0.1 to 1:50, more preferably 1:0.2 to 1:45, still more preferably 1:0.3 to 1:30. The presence of the alcoholic hydroxyl group-containing compound (D) at a ratio controlled as described above more appropriately enhances the stability of the latex composition.

In the latex composition according to the present invention, the alcoholic hydroxyl group-containing compound (D) is present in an amount of preferably 0.03 to 15 parts by weight, more preferably 0.05 to 10 parts by weight relative to 100 parts by weight of the carboxyl group-containing conjugated diene-based rubber (A) in the latex.

For example, the latex composition according to the present invention can be obtained by adding the water-soluble metal compound (B), the Group IV metal compound (C), and the optional alcoholic hydroxyl group-containing compound (D) to the latex of the carboxyl group-containing conjugated diene-based rubber (A). Although the water-soluble metal compound (B), the Group IV metal compound (C), and the optional alcoholic hydroxyl group-containing compound (D) may be added to the latex of the carboxyl group-containing conjugated diene-based rubber (A) in any manner, in order to prepare a latex composition in which the water-soluble metal compound (B) and the Group IV metal compound (C) are dispersed well, it is preferred that the water-soluble metal compound (B) be dissolved in water or an alcohol and added as an aqueous or alcohol solution, and the Group IV metal compound (C) be dispersed in water or an alcohol and added as an aqueous or alcohol dispersion. Additionally, in the case of using the alcoholic hydroxyl group-containing compound (D), it is preferred that the water-soluble metal compound (B) and the alcoholic hydroxyl group-containing compound (D) be dissolved in water or an alcohol and added as an aqueous or alcohol solution to allow the water-soluble metal compound (B) to be dispersed more finely in the resulting latex composition.

Besides the latex of the carboxyl group-containing conjugated diene-based rubber (A), the water-soluble metal compound (B), the Group IV metal compound (C), and the optional alcoholic hydroxyl group-containing compound (D), additives such as a filler, a pH modifier, a thickening agent, an anti-aging agent, a dispersing agent, a pigment, and a softening agent may be added to the latex composition according to the present invention.

The solids content of the latex composition according to the present invention is preferably 10 to 40 wt%, more preferably 15 to 35 wt%. In other words, the moisture content of the latex composition according to the present invention is preferably 60 to 90 wt%, more preferably 65 to 85 wt%. The pH of the latex composition according to the present invention is preferably 8.0 to 12, more preferably 8.5 to 11.

### <Molded film>

The molded film according to the present invention is a film-like molded article formed from the latex composition according to the present invention. The thickness of the molded film according to the present invention is 0.03 to 0.50 mm, more preferably 0.05 to 0.40 mm, particularly preferably 0.08 to 0.30 mm.

The molded film according to the present invention is preferably a dip-molded article obtained by dip-molding the latex composition according to the present invention, although not particularly limited thereto. Dip-molding is a technique in which a dip mold is immersed in a latex composition to deposit the composition on the surface of the dip mold, the dip mold is then pulled from the composition, and the deposit of the composition on the surface of the dip mold is dried. The dip mold may be pre-heated before immersion in the latex composition. Optionally, a coagulant may be used before immersing the dip mold in the latex composition or after pulling the dip mold from the latex composition.

Specific examples of how to use the coagulant include immersing the dip mold in a coagulant solution before immersion in the latex composition to deposit the coagulant on the dip mold (anode coagulant dipping); immersing the dip mold with a deposition of the latex composition in a coagulant solution (Teague coagulant dipping); and the like. Preferred is anode coagulant dipping because a dip-molded article having a more uniform thickness can be obtained.

Examples of the coagulant include metal halides such as barium chloride, calcium chloride, magnesium chloride, zinc chloride, and aluminum chloride; nitrates such as barium nitrate, calcium nitrate, and zinc nitrate; acetates such as barium acetate, calcium acetate, and zinc acetate; sulfates such as calcium sulfate, magnesium sulfate, and aluminum sulfate; and the like. Among these, calcium chloride and calcium nitrate are preferred.

The coagulant is usually used as a solution in water, an alcohol, or a mixture thereof. The coagulant concentration is usually 5 to 50 wt%, preferably 10 to 35 wt%.

In the case where a cuff portion of the dip-molded article should be subjected to beading (cuff rolling), e.g., where the dip molded article is used for a glove, the formed dip-molded layer after drying is subjected to beading to form a beaded portion (rolled cuff portion). Since the dip-molded article according to the present invention is formed using the above-mentioned latex composition according to the present invention, the dip-molded layer formed by dip-molding has reduced adhesion to the dip mold, which is effective in preventing the beading/rolling failure. Accordingly, the present invention can suitably provide a dip-molded article having a beaded portion.

Beading is a process in which before removing the dip-molded layer from the dip mold, the cuff portion of the dip-molded layer is partially peeled from the dip mold to form a demolding tab. In the cuff portion of the dip-molded layer, a portion with a width of preferably 10 to 50 mm, more preferably 20 to 30 mm is peeled such that the peeled portion is rolled. Such a beading process results in a dip-molded article which is resistant to tearing during use and is easy to put on when used as a glove, for example.

Before the beading process, the dip-molded layer formed may be immersed in water, preferably warm water at 30 to 70°C for about 1 to 60 minutes to remove water-soluble impurities (for example, excess emulsifier, coagulant, and the like). After removal of such water-soluble impurities, the dip-molded layer from which the water-soluble impurities have been removed is preferably dried before the beading process. In this case, the conditions of drying are as follows, although not particularly limited to: The temperature is 20 to 100°C, more preferably 30 to 80°C, and the time is preferably 1 to 20 minutes, more preferably 1 to 10 minutes.

After the beading process, the resulting dip-molded layer is typically cross-linked by heating. The dip-molded layer is cross-linked by heating typically at 80 to 150°C preferably for 10 to 130 minutes. Heating methods that can be used are external heating by infrared radiation or heated air and internal heating by high-frequency waves. Among these, external heating by heated air is preferred.

The cross-linked dip-molded layer is then removed from the dip mold. Thus, a dip-molded article is obtained as a film-like molded article. Removal methods that can be used are peeling of the dip-molded layer from the dip mold by hand; and peeling of the dip-molded layer by water pressure or pressure of compressed air. After removal from the mold, the dip-molded article may be further heated at 60 to 120°C for 10 to 120 minutes.

Since the molded film according to the present invention (including the dip-molded film according to the present invention) is formed using the above-mentioned latex composition according to the present invention, the molded film can avoid delayed (Type IV) allergic reactions in addition to immediate (Type I) allergic reactions, has high tensile strength and high stress retention, and barely fails beading/rolling. For this reason, the molded article can be suitably used, for example, in applications in which the molded article is used in contact with the human body and a beaded portion (rolled cuff portion) is desired, and is especially suited as gloves, in particular, surgical gloves. In addition to gloves, the dip-molded article according to the present invention can be used as medical supplies such as baby bottle teats, droppers, tubes, water pillows, balloon stalls, catheters, and condoms; toys such as air balls, dolls, and balls; industrial supplies such as pressure molding bags and gas storage bags; fingerstalls; and the like.

### EXAMPLES

The present invention is hereinafter illustrated in more detail based on Examples, which should not be construed as limitations of the present invention. In the following examples, all "parts" are on a weight basis unless otherwise indicated. The tests and the evaluations were performed according to the following methods.

### <Peel strength between dip-molded layer and glove mold>

Each of the dip-molded layers produced in Examples and Comparative Examples was dried (pre-cured) at 125°C for 5 minutes before removal from the glove mold, and a 180° peel test between the dip-molded layer and the glove mold was performed using a universal tensile tester before removal from the glove mold to measure the peel strength between the dip-molded layer and the glove mold. The peel rate was 500 mm/min. A smaller peel strength indicates weaker adhesion between the dip-molded layer and the glove mold, meaning easier beading (rolling) and better beading workability.

### <Beading/rolling failure of dip-molded layer>

Each of the dip-molded layers produced in Examples and Comparative Examples was dried (pre-cured) at 60°C for 5 minutes before removal from the glove mold, and a beading/rolling operation of rolling an end portion of the dip-molded layer adhering to the glove mold was manually performed thereon before removal from the glove mold. The evaluation was based on the following criteria:
No failure: the beading operation could be finished successfully by performing the rolling of the dip-molded layer five or less times.
Failure: the rolling of the dip-molded layer had to be performed six or more times to finish the beading operation successfully, or the beading operation completely failed.

### <Tensile strength>

Dumbbell-shaped specimens were prepared from each of the rubber gloves produced (the dip-molded articles removed from the dip mold) in Examples and Comparative Examples by using a dumbbell (Die-C, available from Dumbbell Co., Ltd.) according to ASTM D-412. Next, the obtained specimens were stretched at a stretching rate of 500 mm/min, and the tensile strength at break was measured. A higher tensile strength is more preferable.

### <Stress retention>

Dumbbell-shaped specimens were prepared from the rubber gloves produced (the dip-molded articles removed from the dip mold) in Examples and Comparative Examples by using a dumbbell (Die-C, available from Dumbbell Co., Ltd.) according to ASTM D-412. A tensile stress was applied to both ends of each specimen at a rate of 500 mm/min, and when a 20 mm standard section of the specimen was elongated by a factor of 2 (100%), the elongation was stopped and the tensile stress M₁₀₀(0) was measured. Further, the specimen was left in this state for 6 minutes, and was then measured for tensile stress M₁₀₀(6). The percentage of M₁₀₀(6) relative to M₁₀₀(0) (i.e., percentage of M₁₀₀(6)/M₁₀₀(0)) was calculated as stress retention. A greater stress retention is more preferable and indicates that the glove is less likely to slack (become loose or baggy) during use.

### Production Example 1 (production of latex of carboxyl group-containing nitrile rubber (a1-1))

Into a pressure-resistant polymerization reactor equipped with a stirrer, 63 parts of 1,3-butadiene, 34 parts of acrylonitrile, 3 parts of methacrylic acid, 0.25 parts of t-dodecylmercaptan as a chain transfer agent, 132 parts of deionized water, 3 parts of sodium dodecylbenzenesulfonate, 1 part of β-naphthalene sulfonic acid formalin condensate sodium salt, 0.3 parts of potassium persulfate, and 0.005 parts of sodium ethylenediamine tetraacetate were placed, and the polymerization was started while maintaining the polymerization temperature at 37°C. When the polymerization conversion ratio reached 70%, the polymerization temperature was raised to 43°C, and the reaction was continued until the polymerization conversion ratio reached 95%. Thereafter, 0.1 parts of sodium dimethyldithiocarbamate as a polymerization terminator was added to stop the polymerization reaction. Next, from the resulting copolymer latex, unreacted monomers were removed by distillation under reduced pressure, and the solids content and the pH were then adjusted to obtain a latex of a carboxyl group-containing nitrile rubber (a1-1) having a solids content of 40 wt% and a pH of 8.0.

### <Example 1>

### <Preparation of latex composition>

First, a titanium dioxide dispersion was prepared by mixing 4.5 parts of titanium dioxide (TiO₂), 0.3 parts of β-naphthalene sulfonic acid formaldehyde condensate sodium salt, 0.0015 parts of potassium hydroxide, and 4.5 parts of water. In a mixing container, 250 parts (corresponding to 100 parts of the carboxyl group-containing nitrile rubber (a1-1)) of the latex of the carboxyl group-containing nitrile rubber (a1-1) prepared in Production Example 1 was combined with a mixed aqueous solution containing 0.5 parts of sodium aluminate, 0.75 parts of sorbitol, and 0.75 parts of sodium glycolate dissolved in water. To the resulting mixture was added the titanium dioxide dispersion prepared above in an amount corresponding to 1.5 parts of titanium dioxide relative to 100 parts of the carboxyl group-containing nitrile rubber (a1-1). Deionized water was then added to control the solids content to 30 wt%. Thus, a latex composition was prepared.

### <Formation of dip-molded layer>

An aqueous coagulant solution was prepared by mixing 30 parts of calcium nitrate, 0.05 parts of polyethylene glycol octylphenyl ether as a nonionic emulsifier, and 70 parts of water. Next, a ceramic glove mold (ceramic glove mold with a roughened surface) pre-heated to 70°C was immersed in the coagulant aqueous solution for 5 seconds, and was then pulled out and dried at 70°C for 10 minutes to form a deposit of the coagulant on the glove mold. Then, the glove mold with the deposit of the coagulant was immersed in the latex composition obtained above for 10 seconds, and was then pulled out and immersed in warm water at 50°C for 90 seconds to cause water-soluble impurities to elute. Thus, a dip-molded layer was formed on the glove mold.

Next, the glove mold with the dip-molded layer formed thereon was dried (pre-cured) at 125°C for 5 minutes before removal from the glove mold, and the peel strength between the dip-molded layer and the glove mold before removal from the glove mold was measured according to the method described above. Another glove mold with a dip-molded layer formed thereon in the manner described above was also dried (pre-cured) at 60°C for 5 minutes before removal from the glove mold, and was evaluated for beading/rolling failure of the dip-molded layer before removal from the dip mold according to the method described above. The results are shown in Table 1.

### <Formation of dip-molded article>

The dip-molded layer dried (pre-cured) at 125°C for 5 minutes was cross-linked by heating at 125°C for 25 minutes, and the cross-linked dip-molded layer was then removed from the glove mold. Thus, a dip-molded article (rubber glove) was obtained. The obtained dip-molded article (rubber glove) was measured for tensile strength and stress retention according to the methods described above. The results are shown in Table 1.

### <Example 2>

A latex composition was prepared in the same manner as in Example 1 except that titanium dioxide was added in an amount of 3.0 parts relative to 100 parts of the carboxyl group-containing nitrile rubber (a1-1) in the latex. A dip-molded layer and a dip-molded article were evaluated in the same manner as Example 1. The results are shown in Table 1.

### <Example 3>

A zirconium dioxide dispersion was prepared by mixing 4.5 parts of zirconium dioxide (ZrO₂), 0.3 parts of β-naphthalene sulfonic acid formaldehyde condensate sodium salt, 0.0015 parts of potassium hydroxide, and 4.5 parts of water. A latex composition was prepared in the same manner as in Example 1 except that instead of the titanium dioxide dispersion, the zirconium dioxide dispersion was used in an amount corresponding to 1.5 parts of zirconium dioxide relative to 100 parts of the carboxyl group-containing nitrile rubber (a1-1) in the latex. A dip-molded layer and a dip-molded article were evaluated in the same manner as Example 1. The results are shown in Table 1.

### <Comparative Example 1>

A latex composition was prepared in the same manner as in Example 1 except that the titanium dioxide dispersion was not added. A dip-molded layer and a dip-molded article were evaluated in the same manner as Example 1. The results are shown in Table 1.

### <Comparative Example 2>

A latex composition was prepared in the same manner as in Example 1 except that titanium dioxide was added in an amount of 5.0 parts relative to 100 parts of the carboxyl group-containing nitrile rubber (a1-1) in the latex. A dip-molded layer and a dip-molded article were evaluated in the same manner as Example 1. The results are shown in Table 1.

### <Comparative Example 3>

A latex composition was prepared in the same manner as in Example 1 except that the mixed aqueous solution of sodium aluminate, sorbitol, and sodium glycolate was not added. A dip-molded layer and a dip-molded article were evaluated in the same manner as Example 1. The results are shown in Table 1.

### [Table 1]

**Table 1**

| | | Example 1 | Example 2 | Example 3 | Comparative Example 1 | Comparative Example 2 | Comparative Example 3 |
|---|---|---|---|---|---|---|---|
| Composition of latex composition | | | | | | | |
| Carboxyl group-containing nitrile rubber | (parts) | 100 | 100 | 100 | 100 | 100 | 100 |
| Sodium aluminate | (parts) | 0.5 | 0.5 | 0.5 | 0.5 | 0.5 | - |
| Titanium dioxide | (parts) | 1.5 | 3.0 | - | - | 5.0 | 1.5 |
| Zirconium dioxide | (parts) | - | - | 1.5 | - | - | - |

| Evaluations | | | | | | | |
|---|---|---|---|---|---|---|---|
| Peel strength | (N) | 6.6 | 6.9 | 6.4 | 11.1 | 12.6 | 6.5 |
| Beading/rolling failure | | No failure | No failure | No failure | Failure | Failure | No failure |
| Tensile strength | (MPa) | 18.0 | 18.1 | 17.9 | 18 | 17.5 | 7.7 |
| Stress retention | (%) | 70 | 69 | 70 | 70 | 68 | 45 |

As shown in Table 1, dip-molded articles (dip-molded layers) having a reduced adhesion to the dip mold, having no beading/rolling failure, and having high tensile strength and high stress retention were obtained by using the latex compositions which were prepared by adding the water-soluble metal compound (B) and the water-insoluble metal compound (C) including a transition metal of Group IV of the periodic table to the latex of the carboxyl group-containing conjugated diene-based rubber (A), and controlling the amount of the water-insoluble metal compound (C) including a transition metal of Group IV of the periodic table in the range of 0.5 to 4 parts by weight relative to 100 parts by weight of the carboxyl group-containing conjugated diene-based rubber (A) (Examples 1 to 3) .

In contrast, the latex composition free from the water-insoluble metal compound (C) including a transition metal of Group IV of the periodic table and the latex composition containing excessive compound (C) resulted in dip-molded articles (dip-molded layers) adhering strongly to the dip mold, having poor beading workability, and having the beading/rolling failure (Comparative Examples 1 and 2).

The example in which the water-soluble metal compound (B) was not used resulted in a dip-molded article (dip-molded layer) having poor tensile strength and stress retention (Comparative Example 3).

## Claims

1. A latex composition comprising:
a latex of a carboxyl group-containing conjugated diene-based rubber (A);
a water-soluble metal compound (B); and
a water-insoluble metal compound (C) including a transition metal of Group IV of the periodic table,
wherein the metal compound (C) is present in an amount of 0.5 to 4 parts by weight relative to 100 parts by weight of the carboxyl group-containing conjugated diene-based rubber (A).

2. The latex composition according to claim 1,
wherein the metal compound (B) is an aluminum compound.

3. The latex composition according to claim 1 or 2,
wherein the metal compound (B) is sodium aluminate.

4. The latex composition according to any one of claims 1 to 3,
wherein the metal compound (B) is present in an amount of 0.1 to 1.5 parts by weight relative to 100 parts by weight of the carboxyl group-containing conjugated diene-based rubber (A).

5. The latex composition according to any one of claims 1 to 4,
wherein the metal compound (C) is titanium dioxide or zirconium dioxide.

6. The latex composition according to any one of claims 1 to 5,
wherein the amount of the metal compound (C) present is 1.5 to 3 parts by weight relative to 100 parts by weight of the carboxyl group-containing conjugated diene-based rubber (A).

7. A molded film comprising the latex composition according to any one of claims 1 to 6.

8. A method for producing a dip-molded article, comprising the step of dip-molding the latex composition according to any one of claims 1 to 7.
